# EUROPEAN PATENT APPLICATION

(11) **EP 4 815 253 A1**
(43) Date of publication of application: **30.09.2026**
(21) Application number: 26165366.1
(22) Date of filing: 17.03.2026
(51) Int. Cl.: H02J 7/62, H02J 7/63, H02J 7/60, H02J 7/80, H02J 7/96, H01M 10/42

(54) **CHARGE/DISCHARGE CONTROL CIRCUIT, CHARGE/DISCHARGE CONTROL DEVICE, AND BATTERY DEVICE**

(30) Priority: 25.03.2025 JP 2025050178; 27.01.2026 JP 2026011452
(71) Applicant: ABLIC Inc., Kitasaku-gun, Nagano 389-0293 (JP)
(72) Inventor: FUKUCHI, Shinya, Kitasaku-gun, Nagano 389-0293 (JP)
(74) Representative: Winter, Brandl - Partnerschaft mbB

(57) **Abstract**

In order to enable ensuring, in a case in which a power supply terminal is open, an operation corresponding to the case in which the power supply terminal is open, provided is a charge/discharge control circuit formed on a semiconductor substrate. The charge/discharge control circuit (10, 10A, 10B) includes: a power supply terminal open detection circuit (11, 21) configured to provide an open detection result signal; an overdischarge detection circuit (12) configured to provide an overdischarge detection result signal; a control circuit (14) configured to control a charge/discharge path of a secondary battery (30); and an overdischarge mask circuit (13) configured to mask an overdischarge detection signal provided from the overdischarge detection circuit (12) to the control circuit (14) in a case in which an open detection signal indicating that the open state is detected is provided.

## Description

### BACKGROUND

### 1. Field

The present invention relates to a charge/discharge control circuit, a charge/discharge control device, and a battery device.

### 2. Description of the Related Art

Patent document 1 discloses a technology for preventing a malfunction caused by a connection order of respective cells included in a secondary battery. In this technology, a restriction on the connection order is eliminated to achieve reduction in manufacturing cost of a battery device.

Patent document 1 Japanese Patent Application Laid-open No. 2009-207276

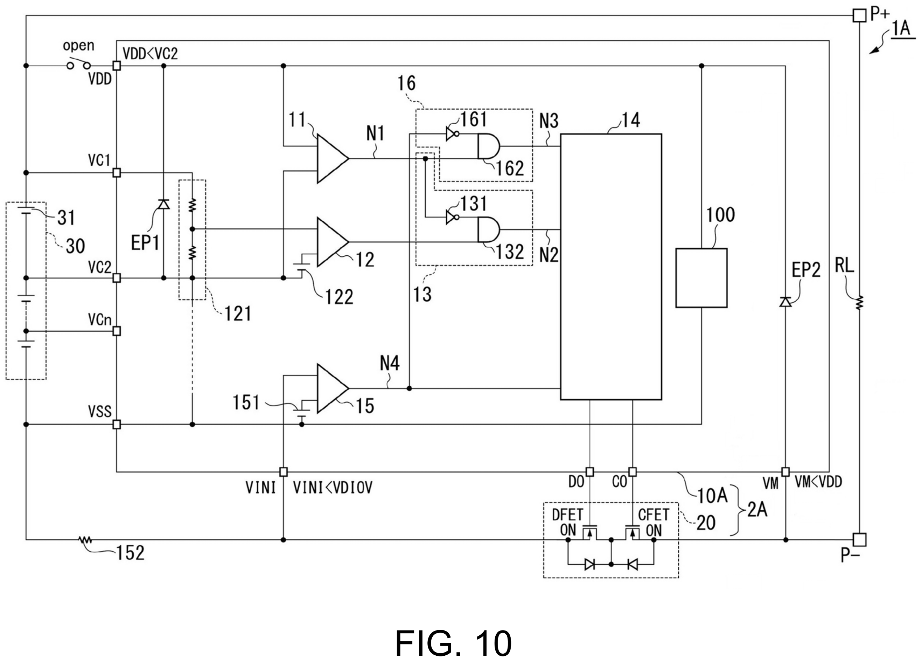

FIG. 10 to FIG. 12 are first to third diagrams for illustrating a configuration example of a charge/discharge control circuit 910 which is an example of the charge/discharge control circuit included in a conventional battery device. Incidentally, in FIG. 10 to FIG. 12, a connection state between a VDD terminal and a positive electrode of a secondary battery is illustrated as a switch that opens and closes a connection between the VDD terminal and the positive electrode of the secondary battery for convenience. That is, a state in which the switch is closed corresponds to a state in which the VDD terminal is connected to (short-circuited with) the positive electrode of the secondary battery, and a state in which the switch is open corresponds to a state in which the VDD terminal is not connected to (is open from) the positive electrode of the secondary battery.

The charge/discharge control circuit 910 includes an internal circuit 9100, the VDD open detection circuit 911, the overdischarge detection circuit 912, and the logic circuit 914. Here, the charge/discharge control circuit 910 illustrated in FIGs 10 to 12 is a semiconductor integrated circuit (IC) formed on a semiconductor substrate of which type is N-type. In the charge/discharge control circuit 910 formed on the N-type semiconductor substrate, the VDD terminal which is a positive electrode power supply terminal is connected to the semiconductor substrate. In the charge/discharge control circuit 910, a connection between the VDD open detection circuit 911 and the logic circuit 914 may be referred to as "node N91.", and a connection between the overdischarge detection circuit 912 and the logic circuit 914 may be referred to as "node N92."

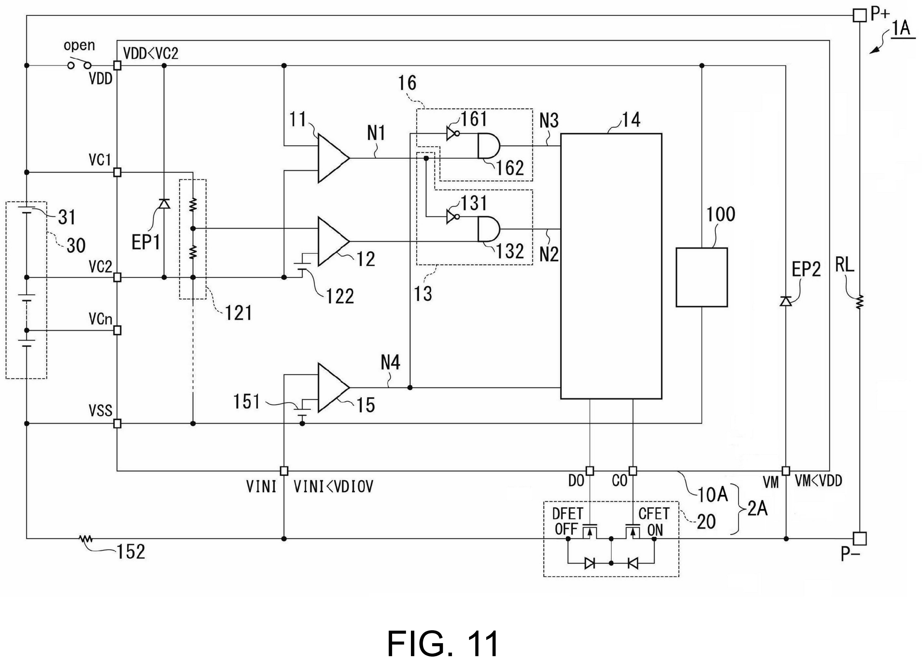

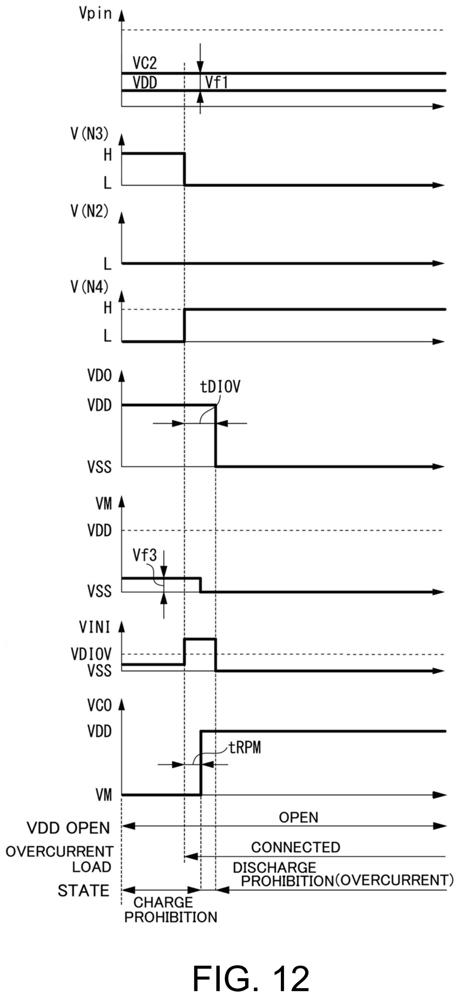

FIG. 10 is an illustration of a case where each connection of each terminal is a normal state. In FIG. 10, a charge Field Effect Transistor (FET) and a discharge FET are respectively ON state. FIG. 11 is an illustration of a state immediately after only the VDD terminal of the battery device including the charge/discharge control circuit 910 becomes open. FIG. 12 is an illustration of a state after transitioning from the state illustrated in FIG. 11.

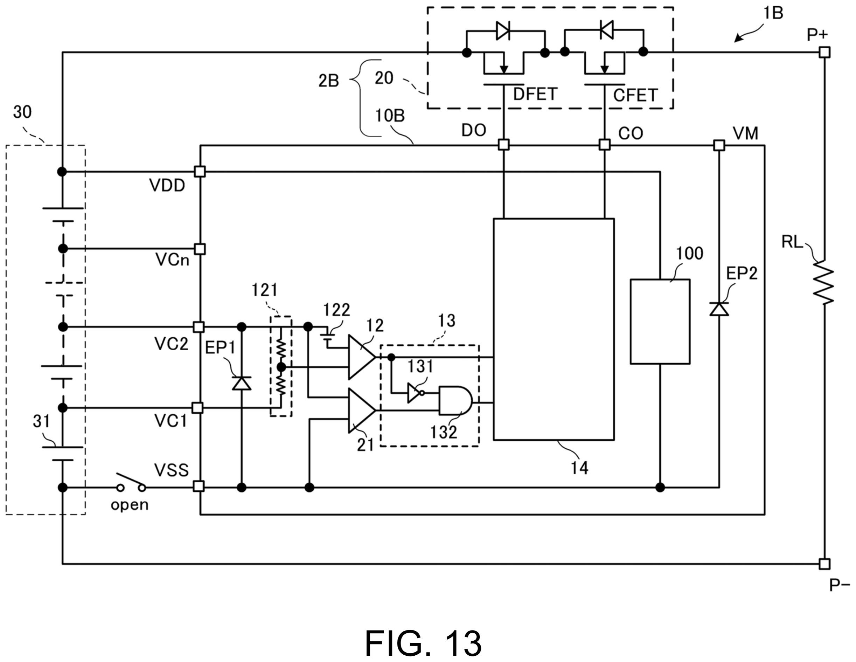

FIG. 13 is a timing chart for illustrating an example of a change in voltage of each terminal, i.e., the VDD terminal, the node N91, the node N92, a DO terminal, a VM terminal, and a CO terminal, in the battery device including the charge/discharge control circuit 910. A voltage V(N91) and a voltage V(N92) written in FIG. 13 are a voltage of a node N91 illustrated in FIG. 10 to FIG. 12 as a connection point between a VDD open detection circuit 911 and a logic circuit 914, and a voltage of a node N92 illustrated in FIG. 10 to FIG. 12 as a connection point between an overdischarge detection circuit 912 and the logic circuit 914, respectively. In FIG. 13, the H level of the voltage V(N91) and the voltage V(N92) corresponds to "detection," and the L level thereof corresponds to "cancellation."

In the charge/discharge control circuit 910, in a case in which only the VDD terminal is in the open state, the voltage Vpin of the VDD terminal becomes equal to or lower than the voltage VC2, and the VDD open detection circuit 911 detects the open state of the VDD terminal. For example, the voltage V(N91) of the node N91 becomes the H level. The voltage Vf1 being a difference between the voltage Vpin and the voltage VC2 is a voltage generated in the parasitic element EP1 between the VDD terminal and the VC2 terminal at the time of VDD open.

Meanwhile, in the overdischarge detection circuit 912 that monitors the highest cell 31, an input voltage of the overdischarge detection circuit 912 becomes equal to or higher than the voltage VDD, that is, exceeds an input range. In a case in which the input voltage of the overdischarge detection circuit 912 exceeds the input range, an output signal (voltage V(N92) of the node N92) of the overdischarge detection circuit 912 becomes indeterminate. In a case in which the indeterminate output signal of the overdischarge detection circuit 912 falls to a detection side, the logic circuit 914 turns off a discharge control FET so as to cause a transition from the normal state, in which charge and discharge are permitted, of which during is illustrated as "N" in FIG. 13, to the overdischarge state (discharge prohibition) after a predetermined delay time tDL elapses from a transition of the voltage V(N92) from the L level to the H level.

In a case in which the discharge control FET is turned off to prohibit discharging of the secondary battery, a voltage of an external negative voltage input terminal (VM terminal) becomes equal to or higher than the voltage VDD obtained when the VDD terminal is normally connected. In a case in which the VM terminal voltage exceeds the voltage Vpin being the voltage of the VDD terminal, the VM terminal and the VDD terminal become conductive due to the parasitic element EP2 operating between the VDD terminal and the VM terminal. Accordingly, the VDD open detection circuit 911 cancels a VDD open detection state even though the VDD terminal remains in the open state.

Further, with the VDD terminal becoming conductive, the input voltage of the overdischarge detection circuit 912 of the highest cell 31 becomes lower than the voltage VDD. Accordingly, the overdischarge detection circuit 912 of the highest cell 31 also cancels detection of the overdischarge state. The voltage Vpin of the VDD terminal at this time is lower than the voltage VDD by a voltage Vf2. The voltage Vf2 is a voltage generated in the parasitic element EP2 between the VDD terminal and the VM terminal in a discharge prohibition state. In a case where the detection of the overdischarge state of the overdischarge detection circuit 912 of the highest cell 31 is canceled, since the logic circuit 914 turns on the discharge control FET by causing transition to the normal state, a discharge of the secondary battery is permitted. Here, a predetermined delay time tDU illustrated in FIG. 13 is a time required for inverting a voltage supplied from the DO terminal after the overdischarge state is canceled.

The operation as described above has completed, the detection of the VDD open detection circuit 911 and the overdischarge detection circuit 912 is canceled. Accordingly, the state returns to the state illustrated as an example in FIG. 11. In this manner, a repeated operation of discharge prohibition and discharge permission of the secondary battery 30, that is, a malfunction occurs.

If a charge/discharge control circuit is configured to be possible to detect an open state of only one of the VDD terminal and the VC1 terminal, in the conventional charge/discharge control circuit in which the malfunction of the overdischarge detection circuit may occur, an operation of the VDD open detection circuit may be obstructed. That is, it is difficult for the conventional charge/discharge control circuit, charge/discharge control device, and battery device to appropriately detect an open state of only the VDD terminal.

The case in which the semiconductor substrate is the N-type semiconductor has been described above as an example. However, even in the case in which the semiconductor substrate is the P-type semiconductor, the above-mentioned event in which the discharge prohibition and the discharge permission of the secondary battery 30 are repeated occurs. However, the polarity of the semiconductor substrate is reversed with respect to the charge/discharge control circuit 910 illustrated as an example in FIG. 10 to FIG. 12. Accordingly, in the charge/discharge control circuit 910 formed on the P-type semiconductor substrate, the VSS terminal being the negative electrode power supply terminal is connected to the semiconductor substrate. Accordingly, the event in which the discharge prohibition and the discharge permission of the secondary battery 30 are repeated occurs not with the VDD terminal being the positive electrode power supply terminal but with the VSS terminal being the negative electrode power supply terminal. Further, polarities, namely, forward directions of the parasitic element EP1 and the parasitic element EP2 are reversed.

An object of at least one aspect of the present invention is to provide a charge/discharge control circuit, a charge/discharge control device, and a battery device that are capable of ensuring, in a case in which a power supply terminal is open, an operation corresponding to the case in which the power supply terminal is open.

### SUMMARY

According to at least one aspect of the present invention, there is provided a charge/discharge control circuit formed on a semiconductor substrate, the charge/discharge control circuit including: a power supply terminal open detection circuit configured to detect whether a power supply terminal connected to the semiconductor substrate is in an open state in which the power supply terminal is not externally connected, and provide an open detection result signal including a signal level corresponding to a detection result; an overdischarge detection circuit configured to detect whether a secondary battery is in an overdischarge state, and provide an overdischarge detection result signal including a signal level corresponding to a detection result; a control circuit configured to perform open/close control of a charge/discharge path of the secondary battery; and an overdischarge mask circuit configured to mask the overdischarge detection result signal supplied from the overdischarge detection circuit to the control circuit in a case in which the open detection result signal supplied from the power supply terminal open detection circuit to the control circuit includes a signal level corresponding to the open state.

### EFFCT

According to the at least one aspect of the present invention, it is possible to ensure, in the case in which the power supply terminal is open, the operation corresponding to the case in which the power supply terminal is open.

### BRIEF DESCRIPTION OF THE DRAWINGS

FIG. 1 is a first diagram of a schematic diagram for illustrating a configuration example of a battery device according to a first embodiment of the present invention.
FIG. 2 is a second diagram of a schematic diagram for illustrating the configuration example of the battery device according to the first embodiment.
FIG. 3 is a third diagram of the schematic diagram for illustrating the configuration example of the battery device according to the first embodiment.
FIG. 4 is a timing chart for illustrating an example of a change in voltage of each terminal in the battery device according to the first embodiment.
FIG. 5 is a first diagram of a schematic diagram for illustrating a configuration example of a battery device according to a second embodiment of the present invention.
FIG. 6 is a second diagram of the schematic diagram for illustrating the configuration example of the battery device according to the second embodiment.
FIG. 7 is a third diagram of the schematic diagram for illustrating the configuration example of the battery device according to the second embodiment.
FIG. 8 is a timing chart for illustrating a change in voltage of each terminal in the battery device according to the second embodiment.
FIG. 9 is a schematic diagram for illustrating a battery device according to a modification example of the first embodiment.
FIG. 10 is a first diagram of a schematic diagram for illustrating a configuration example of a conventional charge/discharge control circuit.
FIG. 11 is a second diagram of the schematic diagram for illustrating the configuration example of the conventional charge/discharge control circuit.
FIG. 12 is a third diagram of the schematic diagram for illustrating the configuration example of the conventional charge/discharge control circuit.
FIG. 13 is a timing chart for illustrating an example of a change in voltage of each terminal in the conventional charge/discharge control circuit.

### DESCRIPTION OF THE EMBODIMENTS

A charge/discharge control circuit, a charge/discharge control device, and a battery device according to at least one embodiment of the present invention are described in detail below by means of preferred embodiments with reference to the attached drawings. In the description of the drawings, the same or similar parts are denoted by the same or similar reference symbols. Further, in the attached drawings, a connection state between a VDD terminal and a positive electrode of a secondary battery is illustrated as a switch that opens and closes a connection between the VDD terminal and the positive electrode of the secondary battery for convenience. That is, a state in which the switch is closed corresponds to a state in which the VDD terminal is connected to (short-circuited with) the positive electrode of the secondary battery, and a state in which the switch is open corresponds to a state in which the VDD terminal is not connected to (is open from) the positive electrode of the secondary battery.

Throughout the drawings for illustrating the embodiments, components having the same function are denoted by the same reference symbols, and a duplicate description thereof is omitted. The description "based on XX" as used herein means "based on at least XX," and encompasses a case of being "based on another element in addition to XX." Further, the description "based on XX" is not limited to a case of directly using "XX" but encompasses a case of being "based on a result of calculating or processing XX." The term "XX" refers to a freely selected element (for example, freely selected information). Further, in the at least one embodiment, a detection result in which a detection circuit detects a detection target is referred to as "detection," and a detection result in which the detection circuit does not detect the detection target is referred to as "cancellation."

### [First Embodiment]

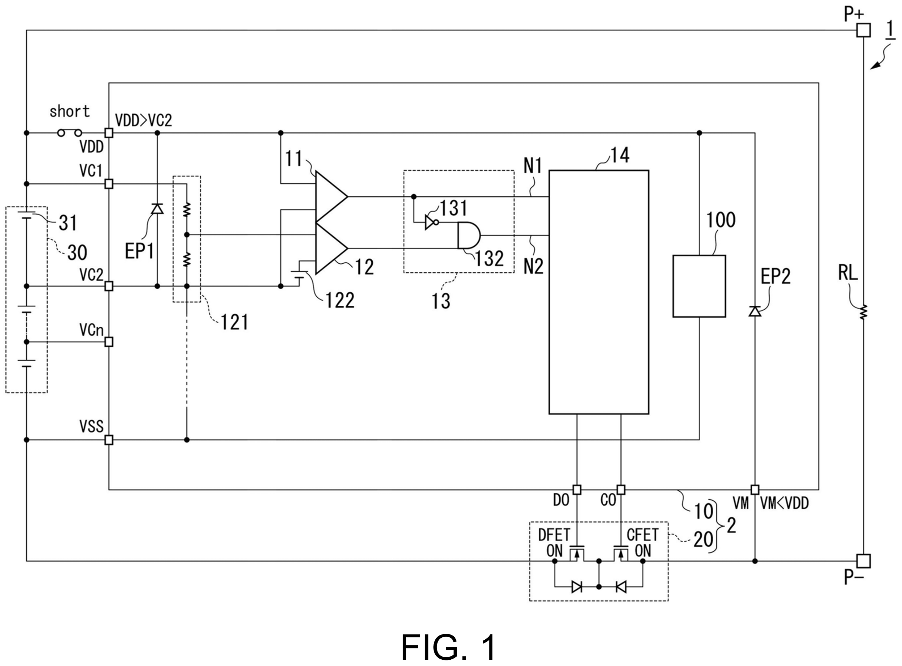

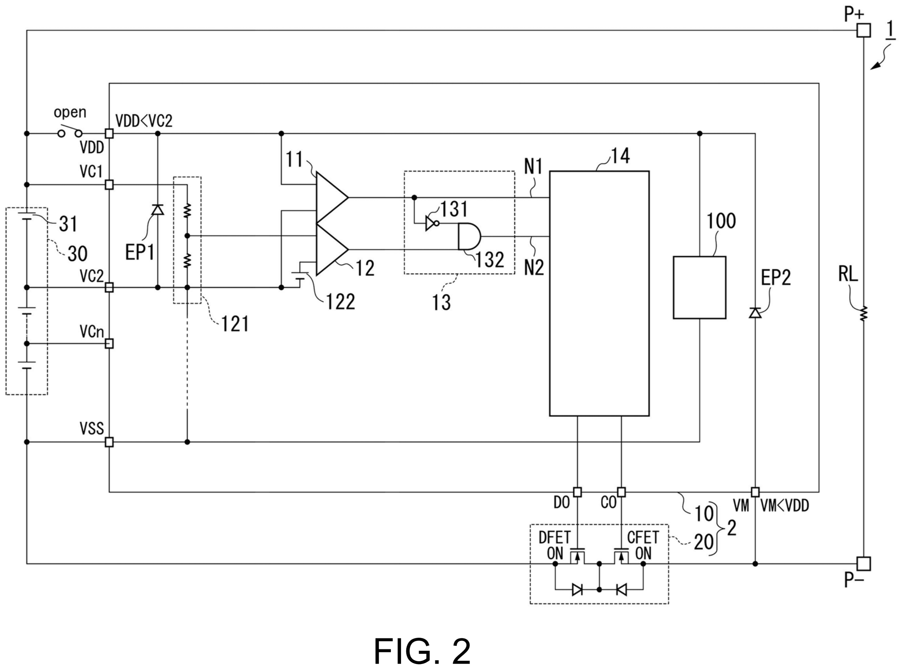

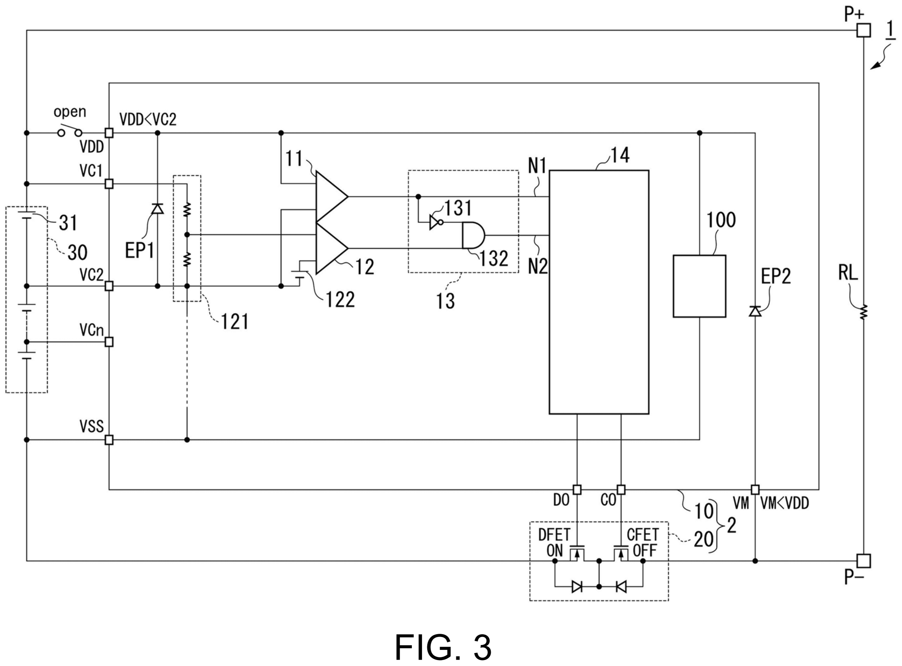

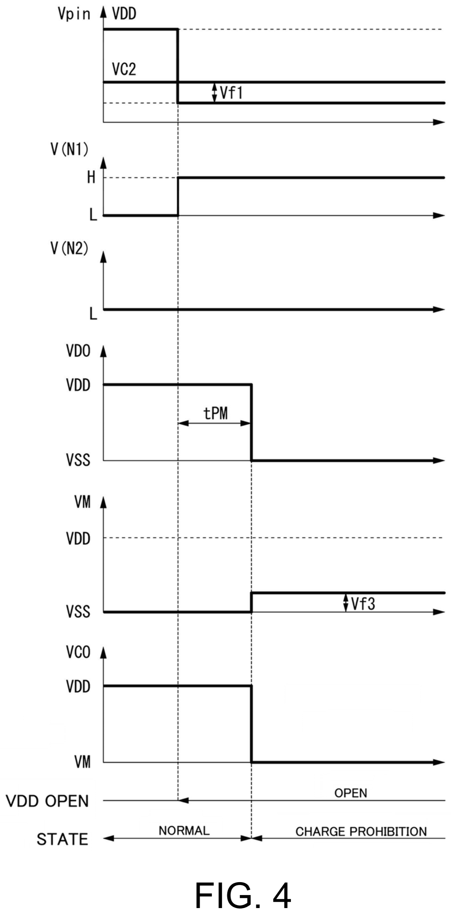

FIG. 1 to FIG. 3 are schematic diagrams for illustrating a configuration example of a battery device 1 which is an example of a battery device according to a first embodiment of the present invention. FIG. 1 is an illustration of the configuration example of the battery device 1 in a case in which all connections are normal, that is, a normal state. FIG. 2 is an illustration of an example immediately after only the VDD terminal becomes open. FIG. 3 is an illustration of an example of a situation transitioning from FIG. 2. FIG. 4 is a timing chart for illustrating an example of a change in voltage of each terminal in the battery device 1 according to the first embodiment. FIG. 4 is an illustration of an example of changes in voltage in FIG. 1 to FIG. 3.

The battery device 1 is described below.

The battery device 1 includes a charge/discharge control circuit 10, an external FET 20, and a secondary battery 30. The charge/discharge control circuit 10 is an example of a circuit that protects the secondary battery 30 from overdischarge or the like by operating based on a predetermined condition to control, for example, charge/discharge of the secondary battery 30.

The external FET 20 is provided in a charge/discharge path of the secondary battery 30, and operates in accordance with a control signal provided from the charge/discharge control circuit 10 to control charge/discharge of the secondary battery 30. In the following, in some cases, the charge/discharge control circuit 10 and the external FET 20 are collectively referred to as "charge/discharge control device 2." The external FET 20 includes a charge control transistor CFET and a discharge control transistor DFET. In the external FET 20, for example, the charge control transistor CFET and the discharge control transistor DFET are connected in series. The charge/discharge path of the secondary battery 30 includes, at both ends thereof, external terminals including an external positive electrode terminal P+ and an external negative electrode terminal P-.

The charge control transistor CFET includes a gate connected to a CO terminal of the charge/discharge control circuit 10, and the control signal is supplied to the gate. The charge control transistor CFET includes a source and a drain connected to the charge/discharge path of the secondary battery 30. For example, a charge current of the secondary battery 30 is interrupted by turning off the charge control transistor CFET. Further, similarly to the charge control transistor CFET, the discharge control transistor DFET includes a gate connected to a DO terminal of the charge/discharge control circuit 10, and a source and a drain connected to the charge/discharge path of the secondary battery 30. For example, a discharge current of the secondary battery 30 is interrupted by turning off the discharge control transistor DFET. The external FET 20 controls the charge/discharge path of the secondary battery 30 by the charge control transistor CFET and the discharge control transistor DFET provided in the charge/discharge path.

The secondary battery 30 includes a plurality of cells as components. The plurality of cells are connected in series, for example. Further, in some cases, a cell having the highest voltage among the cells of the secondary battery 30 is referred to as "highest cell 31." Specific examples of the secondary battery 30 include a lithium ion battery and a lead storage battery.

The charge/discharge control circuit 10 illustrated as an example in FIG. 1 to FIG. 3 is, for example, a semiconductor integrated circuit (IC) formed on a semiconductor substrate that is an N-type semiconductor. The charge/discharge control circuit 10 includes, for example, an internal circuit 100, a VDD open detection circuit 11, an overdischarge detection circuit 12, an overdischarge mask circuit 13, and a logic circuit 14. Further, the charge/discharge control circuit 10 includes, for example, the VDD terminal, a VC1 terminal to a VCn terminal, a VSS terminal, the CO terminal, the DO terminal, and a VM terminal. In the charge/discharge control circuit 10 formed on the N-type semiconductor substrate, the VDD terminal which is a positive electrode power supply terminal is connected to the semiconductor substrate.

The VDD terminal is a power supply terminal (also referred to as "positive electrode power supply terminal") connected to a power supply outside the charge/discharge control circuit 10. The VDD terminal is, for example, a terminal connected to a positive electrode of the secondary battery 30. A voltage VDD is a voltage supplied for an operation of the charge/discharge control circuit 10. Conceivable examples of a state of VDD open (also referred to as "VDD terminal open") include a case in which a connection failure of solder between a circuit board and the charge/discharge control circuit 10 occurs and a case in which a resistor (not shown) for a filter between the charge/discharge control circuit 10 and the secondary battery 30 is disconnected. A voltage of the VDD terminal is referred to as "voltage Vpin."

The VC1 terminal to the VCn terminal are terminals connected to positive electrodes of respective cells included in the secondary battery 30. Specifically, the VC1 terminal is connected to a positive electrode of the highest cell 31, the VC2 terminal is connected to a positive electrode of a second cell, and the VCn terminal is connected to a positive electrode of an n-th cell. In a case in which the VC1 terminal to the VCn terminal are not distinguished, the terminals may be simply referred to as "VC terminals." The VSS terminal is, for example, a power supply terminal (also referred to as "negative electrode power supply terminal") connected to a negative electrode of the secondary battery 30. The CO terminal is a terminal connected to the gate of the charge control transistor CFET. The CO terminal may be referred to as "charge control terminal." The DO terminal is a terminal connected to the discharge control transistor DFET. The DO terminal may be referred to as "discharge control terminal." The VM terminal is an external negative voltage input terminal for detecting whether or not a charger (not shown) is connected to the external terminals. In the following, a positive electrode side of the external terminals is referred to as "external positive electrode terminal P+," and a negative electrode side of the external terminals is referred to as "external negative electrode terminal P-." An external device such as a load RL or a charger is connected between the external positive electrode terminal P+ and the external negative electrode terminal P-.

The internal circuit 100 is connected to the VDD terminal and the VSS terminal, and performs a predetermined operation. A path is generated between the VDD terminal and the VC2 terminal by a parasitic element EP1. Similarly to the case of the VC2 terminal, a path is also generated between the VDD terminal and the VCn terminal by the parasitic element EP1. The parasitic element EP1 is generated by an offset transistor or the like. Further, a path is generated between the VDD terminal and the VM terminal by a PN junction parasitic element EP2 of a P-type semiconductor.

The VDD open detection circuit 11 (also referred to as "positive electrode power supply terminal open detection circuit") is, for example, a comparator including a first end connected to the VDD terminal, a second end connected to the VC2 terminal, and an output end connected to the logic circuit 14 via the overdischarge mask circuit 13. The VDD open detection circuit 11 serving as the power supply terminal open detection circuit is designed to operate even in a case in which an input voltage supplied to one of the first end or the second end exceeds an input range. The VDD open detection circuit 11 detects whether or not power supply to the charge/discharge control circuit 10 is interrupted, that is, whether or not the VDD terminal is open, and provides an output signal (hereinafter referred to as "open detection result signal") including a signal level corresponding to a detection result. In the following description, the output signal provided in a case in which the VDD open detection circuit 11 detects an open state of the VDD terminal may be referred to as "VDD open detection signal" or "open detection signal."

The overdischarge detection circuit 12 includes a first end connected to a ladder circuit 121 for overdischarge detection. More specifically, the first end of the overdischarge detection circuit 12 is connected to a voltage dividing point for overdischarge detection between ladder resistors between the VC terminal connected to the positive electrode of the detection target cell and the VC terminal connected to the negative electrode thereof. Further, the overdischarge detection circuit 12 includes a second end connected to a positive side of a reference voltage circuit 122 that generates a constant reference voltage regardless of a change in voltage value of the voltage VDD or the like. Further, the overdischarge detection circuit 12 is a comparator including an output end connected to the logic circuit 14 via the overdischarge mask circuit 13. The overdischarge detection circuit 12 detects whether or not the detection target cell is in an overdischarge state, and provides an output signal (hereinafter referred to as "overdischarge detection result signal") including a signal level corresponding to a detection result. In the following description, the output signal provided in a case in which the overdischarge detection circuit 12 detects the overdischarge may be referred to as "overdischarge detection signal."

The overdischarge mask circuit 13 is connected to, for example, the output end of the VDD open detection circuit 11, the output end of the overdischarge detection circuit 12, and the logic circuit 14. The overdischarge mask circuit 13 is electrically connected, for example, between the VDD open detection circuit 11 and the overdischarge detection circuit 12, and the logic circuit 14. The overdischarge mask circuit 13 masks the overdischarge detection signal provided from the overdischarge detection circuit 12 in a case in which the VDD open detection signal is provided from the VDD open detection circuit 11. Masking the detection result signal means providing a subsequent circuit with a detection cancellation signal indicating that, regardless of whether or not the detection target of the detection signal being masked is detected, the detection target is not detected.

For example, masking the overdischarge detection result signal corresponds to providing the overdischarge detection result signal of an L level to the subsequent circuit in a case in which, among output signals from the overdischarge detection circuit 12, the overdischarge detection signal is a signal of an H level and an overdischarge detection cancellation signal indicating that the overdischarge is not detected is the L level. Thus, while the detection result signal is masked, the detection cancellation signal is provided regardless of whether or not a state to be detected is actually detected. In a case in which a signal supplied to the mask circuit is the detection cancellation signal, the detection cancellation signal is provided regardless of whether or not the signal is masked. Accordingly, masking the detection result signal as described above is substantially synonymous with masking the detection signal.

The overdischarge mask circuit 13 includes, for example, a first inversion circuit 131 and a first AND circuit 132. The first inversion circuit 131 includes an input end connected to a connection point between the output end of the VDD open detection circuit 11 and an input end of the logic circuit 14 for a signal indicating a detection result of VDD open, and an output end connected to a first input end of the first AND circuit 132. Thus, the overdischarge mask circuit 13 provides the open detection result signal provided from the VDD open detection circuit 11 to the logic circuit 14 as it is.

The first AND circuit 132 includes the first input end connected to the output end of the first inversion circuit 131, a second input end connected to the output end of the overdischarge detection circuit 12, and an output end connected to the input end of the logic circuit 14 for the overdischarge detection result signal. Thus, in the overdischarge mask circuit 13, the signal of the H level indicating the VDD open detection is inverted by the first inversion circuit 131 to become the L level. Accordingly, in a case in which the VDD open is detected, the overdischarge mask circuit 13 provides a signal of the L level indicating that the overdischarge is not detected, that is, the overdischarge detection cancellation signal, to the logic circuit 14 regardless of whether or not the overdischarge is detected. Further, in the overdischarge mask circuit 13, a signal of the L level indicating that the VDD open is not detected is inverted by the first inversion circuit 131 to become the H level. Accordingly, in a case in which the VDD open is not detected, the overdischarge mask circuit 13 provides a signal of a logic level corresponding to whether or not the overdischarge is detected to the logic circuit 14. Accordingly, the overdischarge mask circuit 13 can mask the output signal indicating the overdischarge detection in the case in which the VDD open is detected.

The output signal from the VDD open detection circuit 11 and the output signal from the overdischarge detection circuit 12 are supplied to the logic circuit 14 via the overdischarge mask circuit 13. The logic circuit 14 performs an operation of protecting each of the components of the battery device 1 including the secondary battery 30 from an abnormality such as the VDD open, the overdischarge, and a discharge overcurrent. For example, the logic circuit 14 provides control signals to the CO terminal and the DO terminal in accordance with the output signal from the VDD open detection circuit 11 and the output signal from the overdischarge detection circuit 12. The charge control transistor CFET including the gate connected via the CO terminal and the discharge control transistor DFET including the gate connected via the DO terminal switch between on and off in accordance with the control signals from the logic circuit 14. The logic circuit 14 may be referred to as "control circuit."

In the following description, a connection between the VDD open detection circuit 11 and the logic circuit 14 may be referred to as "node N1." Specifically, the node N1 is a connection among the output end of the VDD open detection circuit 11, the input end of the first inversion circuit 131, and the logic circuit 14. A voltage V(N1) of the node N1 corresponds to the signal level of the open detection result signal provided from the VDD open detection circuit 11. Further, in a connection between the overdischarge detection circuit 12 and the logic circuit 14 via the overdischarge mask circuit 13, a connection between the overdischarge mask circuit 13 and the logic circuit 14 may be referred to as "node N2." Specifically, the node N2 is a connection between the output end of the first AND circuit 132 and the logic circuit 14. A voltage V(N2) of the node N2 corresponds to the signal level of the overdischarge detection result signal masked by the overdischarge mask circuit 13.

Next, a specific operation example of the charge/discharge control circuit 10 is described with reference to FIG. 1 to FIG. 4.

In a case in which only the VDD terminal becomes open as illustrated in FIG. 2, the voltage Vpin of the VDD terminal becomes equal to or lower than a voltage VC2. With the voltage Vpin of the VDD terminal becoming equal to or lower than the voltage VC2, the VDD open detection circuit 11 detects the open state of the VDD terminal. At this time, the voltage Vpin is lower than the voltage VC2 by a voltage Vf1. Meanwhile, in the overdischarge detection circuit 12, an input voltage becomes equal to or higher than the voltage Vpin of the VDD terminal. Accordingly, the input voltage exceeds an input range, and an output of the overdischarge detection circuit 12 becomes indeterminate.

The VDD open detection signal becomes the L level via the first inversion circuit 131 and is supplied to the first AND circuit 132. Accordingly, the overdischarge detection result signal provided from the first AND circuit 132 and supplied to the logic circuit 14 becomes the L level regardless of the signal level of the signal provided from the overdischarge detection circuit 12 as illustrated in FIG. 2. Thus, the logic circuit 14 can appropriately operate in a VDD open state without entering the overdischarge state at the time of VDD open detection as illustrated in FIG. 3.

Specifically, after a delay time tPM of VDD open detection elapses, the logic circuit 14 provides control signals of the L level to the CO terminal and the DO terminal to cause each of a voltage VCO of the CO terminal and a voltage VDO of the DO terminal to transition from the H level to the L level. With the voltage VCO and the voltage VDO transitioning to the L level, the charge control transistor CFET and the discharge control transistor DFET are turned off. After charging is prohibited, a voltage Vf3 is generated in a body diode of the charge control transistor CFET. Because the voltage Vf3 is lower than the voltage VDD obtained when the VDD terminal is normally connected, the VDD terminal and the VM terminal do not become conductive due to a parasitic element between the VDD terminal and the VM terminal. Accordingly, the VDD open state can be continued without transitioning to the normal state.

### [Second Embodiment]

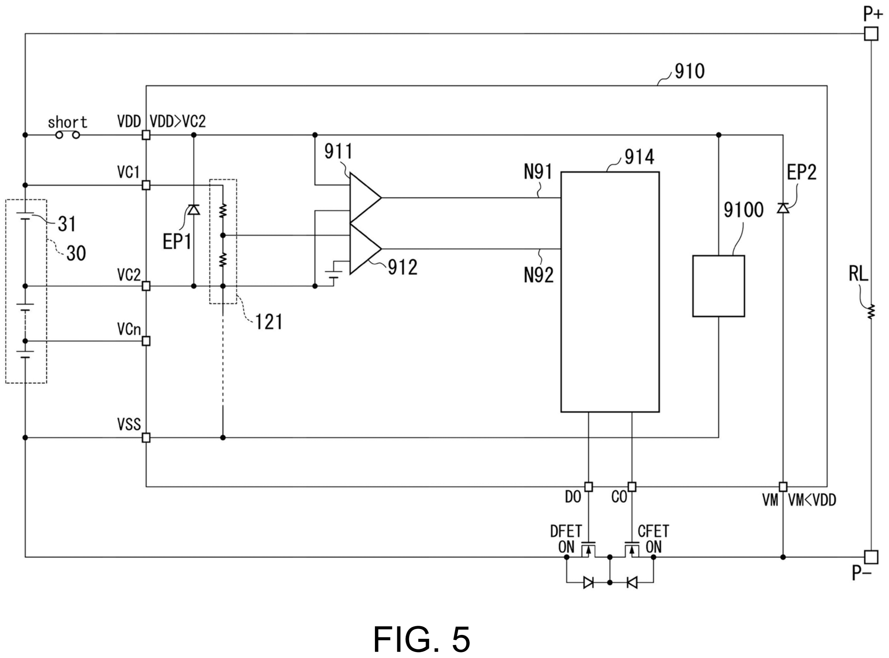

FIG. 5 to FIG. 7 are first to third diagrams of schematic diagrams for illustrating a configuration example of a battery device 1A which is an example of a battery device according to a second embodiment of the present invention.

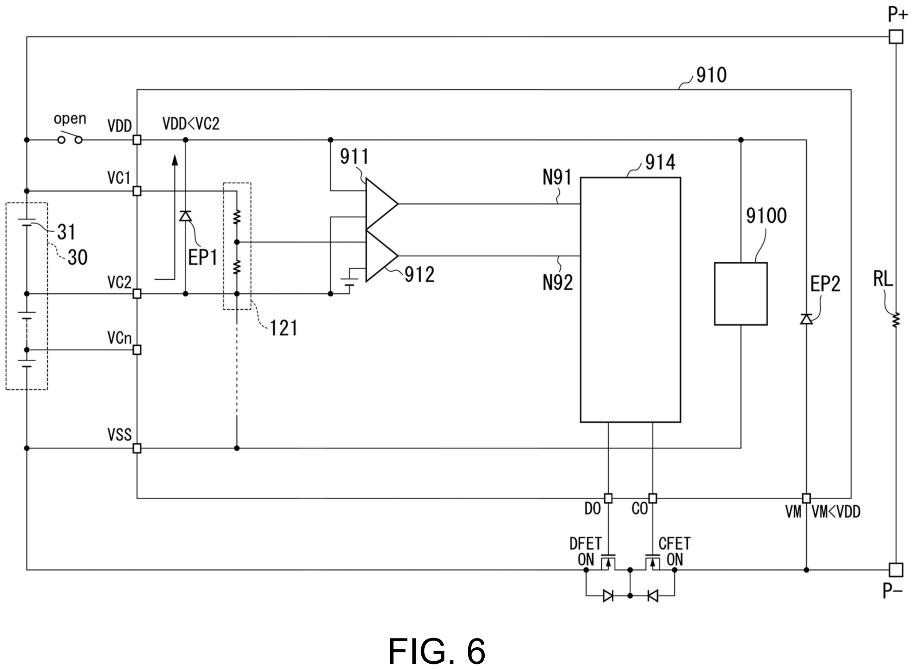

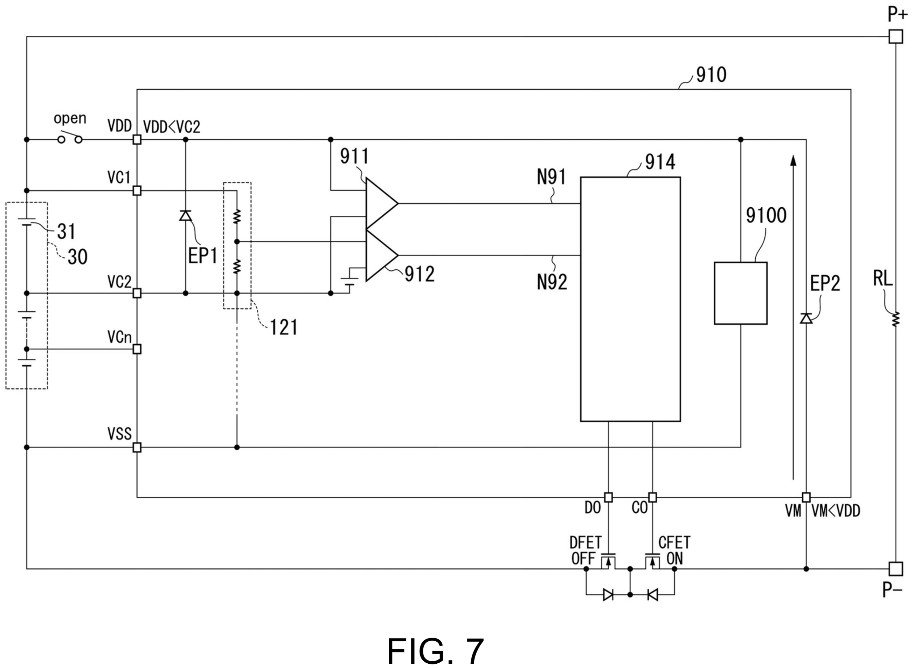

FIG. 5 is an illustration of a configuration example of the battery device 1A, and corresponds to a state in which the overdischarge detection signal is masked by VDD open detection. That is, the state illustrated in FIG. 5 corresponds to the state illustrated in FIG. 3. In FIG. 6, an example immediately after detection of the discharge overcurrent is illustrated. In FIG. 7, an example of a situation transitioning from the situation illustrated in FIG. 6.

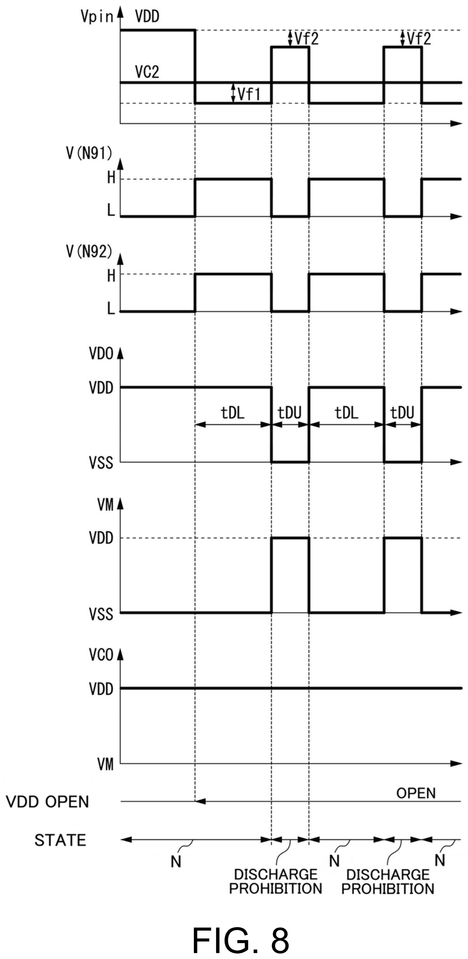

FIG. 8 is a timing chart for illustrating an example of a change in voltage of each terminal in the battery device 1A. FIG. 8 is an illustration of an example of changes in voltage in FIG. 5 to FIG. 7. FIG. 8 is an illustration of an example of a change in voltage in the charge/discharge control circuit 10A. The charge/discharge control circuit 10A is similar to the charge/discharge control circuit 10 (Please refer to FIG. 4) in that the overdischarge detection signal at the time of VDD open is masked by the overdischarge mask circuit 13. Meanwhile, the charge/discharge control circuit 10A is different from the charge/discharge control circuit 10 in that the VDD open detection signal is masked under a predetermined condition. The charge/discharge control circuit 10A further includes a discharge overcurrent detection circuit 15 and a VDD open mask circuit 16 in addition to the components included in the charge/discharge control circuit 10.

The discharge overcurrent detection circuit 15 is a comparator including a first input end connected to the charge/discharge path of the secondary battery 30 via a VINI terminal being a terminal for overcurrent detection, a second input end connected to a reference voltage circuit 151 for discharge overcurrent detection, and an output end connected to the logic circuit 14. A sense resistor 152 for current measurement is provided in the charge/discharge path of the secondary battery 30. In the following description, among signals (hereinafter referred to as "discharge overcurrent detection result signals") provided from the discharge overcurrent detection circuit 15, a signal provided in a case in which the discharge overcurrent is detected may be referred to as "discharge overcurrent detection signal." In a case in which the discharge overcurrent detection signal (for example, H level) is provided from the discharge overcurrent detection circuit 15, the logic circuit 14 causes a transition to a discharge overcurrent state, and performs predetermined control on the external FET 20. Although not shown in FIG. 1 to FIG. 3, the discharge overcurrent detection circuit 15 may be provided in the charge/discharge control circuit 10.

The VDD open mask circuit 16 (hereinafter also referred to as "open mask circuit") is connected to, for example, the output end of the VDD open detection circuit 11, the output end of the discharge overcurrent detection circuit 15, and the logic circuit 14. The VDD open mask circuit 16 is electrically connected, for example, between the VDD open detection circuit 11 and the discharge overcurrent detection circuit 15, and the logic circuit 14. The VDD open mask circuit 16 masks the VDD open detection signal provided from the VDD open detection circuit 11 in a case in which the discharge overcurrent detection signal is provided from the discharge overcurrent detection circuit 15. The VDD open mask circuit 16 includes, for example, a second inversion circuit 161 and a second AND circuit 162.

The second inversion circuit 161 includes an input end connected to a connection point between the output end of the discharge overcurrent detection circuit 15 and the input end of the logic circuit 14 for a signal indicating whether or not the discharge overcurrent is detected, and an output end connected to a first input end of the second AND circuit 162. Thus, the VDD open mask circuit 16 provides the signal provided from the discharge overcurrent detection circuit 15 to the logic circuit 14 as it is.

The second AND circuit 162 includes the first input end connected to the output end of the second inversion circuit 161, a second input end connected to the output end of the VDD open detection circuit 11, and an output end connected to the input end of the logic circuit 14 for the detection result signal of VDD open. Thus, in the VDD open mask circuit 16, the signal of the H level indicating that the discharge overcurrent is detected is inverted by the second AND circuit 162 to become the L level. Accordingly, in a case in which the discharge overcurrent is detected, the VDD open mask circuit 16 provides a signal of the L level indicating that the VDD open is not detected to the logic circuit 14 regardless of whether or not the VDD open is detected. That is, the VDD open mask circuit 16 masks the VDD open detection result signal with the configuration similar to that of the overdischarge mask circuit 13.

In a case in which the VDD open mask circuit 16 is provided, the VDD open detection signal supplied to the overdischarge mask circuit 13 is directly supplied from the VDD open detection circuit 11, and is not supplied via the VDD open mask circuit 16. Accordingly, masking of the overdischarge detection signal at the time of VDD open detection can be performed similarly to the charge/discharge control circuit 10.

In the following description, the node N1 is specifically a connection among the output end of the VDD open detection circuit 11, the input end of the first inversion circuit 131, and the second input end of the second AND circuit 162. The voltage V(N1) of the node N1 corresponds to the signal level of the unmasked open detection result signal provided from the VDD open detection circuit 11.

A node N3 is specifically a connection between the output end of the second AND circuit 162 and the logic circuit 14. A voltage V(N3) of the node N3 corresponds to the signal level of the masked open detection result signal provided from the VDD open detection circuit 11. Further, a connection between the discharge overcurrent detection circuit 15 and the logic circuit 14 may be referred to as "node N4."

Specifically, the node N4 is a connection among the output end of the discharge overcurrent detection circuit 15, the input end of the second inversion circuit 161, and the logic circuit 14. A voltage V(N4) of the node N4 corresponds to the signal level of the discharge overcurrent detection result signal provided from the discharge overcurrent detection circuit 15.

Next, a specific operation example of the charge/discharge control circuit 10A is described with reference to FIG. 5 to FIG. 8. Because VDD open is detected as illustrated in FIG. 6, the overdischarge detection signal is masked.

In FIG. 7, in order to avoid destruction of the charge control transistor CFET, in a case in which the discharge overcurrent detection circuit 15 detects that the discharge overcurrent is flowing through the charge/discharge path, the discharge overcurrent detection circuit 15 provides the discharge overcurrent detection signal of, for example, the H level indicating that the discharge overcurrent is detected. For example, in a case in which the H level indicates that the discharge overcurrent is detected, the discharge overcurrent detection circuit 15 provides the discharge overcurrent detection signal of the H level in a case in which a voltage supplied to the VINI terminal exceeds a voltage VDIOV being an overcurrent detection voltage.

Because the discharge overcurrent detection signal becomes the L level via the second inversion circuit 161 and is supplied to the second AND circuit 162, the VDD open detection signal supplied to the logic circuit 14 is masked to become the L level as illustrated in FIG. 6. Further, because the VDD open detection signal becomes the L level via the first inversion circuit 131 and is supplied to the first AND circuit 132, the signal indicating whether or not the overdischarge is detected supplied to the logic circuit 14 remains at the L level.

At this time, a delay time tRPM of VDD open state cancellation is shorter than a delay time tDIOV of discharge overcurrent detection. Accordingly, after the VDD open state is canceled, the state transitions to the discharge overcurrent state. In a case in which the discharge overcurrent flows in the VDD open state in which charging is prohibited by turning off the charge control transistor CFET, there is a possibility that the charge control transistor CFET is destroyed by a current flowing through the body diode of the charge control transistor CFET. After the delay time tRPM of VDD open state cancellation elapses, the logic circuit 14 provides the control signal of the H level to the CO terminal to turn on the charge control transistor CFET, thereby allowing the flowing current to flow into a channel of the charge control transistor CFET.

Further, after the delay time tDIOV of discharge overcurrent detection elapses, the logic circuit 14 provides the control signal of the L level to the DO terminal to turn off the discharge control transistor DFET, thereby entering the discharge prohibition state and addressing the discharge overcurrent.

In the above description, the overdischarge detection circuit of the highest cell 31 has been described as an example. However, the second embodiment is not limited to this example, and can be applied to other cells. Specifically, the overdischarge detection circuit 12 may use any one of the voltages VC3 to VCn as the reference voltage.

According to the embodiment described above, the charge/discharge control circuit 10 includes the overdischarge mask circuit 13 that masks the overdischarge detection result signal supplied from the overdischarge detection circuit 12 to the logic circuit 14 in the case in which the VDD open detection result signal supplied from the VDD open detection circuit 11 serving as the power supply open detection circuit to the logic circuit 14 serving as the control circuit includes the signal level (for example, H level) corresponding to the open state. According to the charge/discharge control circuit 10 including the overdischarge mask circuit 13, it is possible to prevent the control of the logic circuit 14 from repeating the overdischarge state and the normal state due to the output of the overdischarge detection circuit 12 becoming indeterminate at the time of VDD open. Accordingly, at the time of VDD open, the charge/discharge control circuit 10 is not hindered from controlling the VDD open state by the overdischarge detection signal, and can reliably perform control (charge prohibition) of the external FET 20 corresponding to the VDD open state.

Further, according to the embodiment described above, the overdischarge mask circuit 13 includes the first inversion circuit 131 including the input end connected to the connection point between the output end of the VDD open detection circuit 11 and the control circuit, and the first AND circuit 132 including the first input end connected to the output end of the first inversion circuit 131, the second input end connected to the output end of the overdischarge detection circuit 12, and the output end connected to the control circuit. According to the overdischarge mask circuit 13 configured in this manner, a desired function can be achieved by a slight circuit increase of the first inversion circuit 131 and the first AND circuit 132. Further, because the configurations of the charge/discharge control circuit 10 other than the overdischarge mask circuit 13 can be achieved by existing configurations, it is not required to adjust other configurations for application of the overdischarge mask circuit 13, and the application is easy.

According to the embodiment described above, the charge/discharge control circuit 10A further includes: the discharge overcurrent detection circuit 15 that detects whether or not the state is the discharge overcurrent state, and provides the discharge overcurrent detection result signal including the signal level corresponding to the detection result; and the VDD open mask circuit 16 that masks the VDD open detection result signal supplied from the VDD open detection circuit 11 to the control circuit in a case in which the discharge overcurrent detection result signal supplied from the discharge overcurrent detection circuit 15 to the logic circuit 14 includes the signal level (for example, H level) corresponding to the discharge overcurrent state.

According to the charge/discharge control circuit 10A configured in this manner, at the time of discharge overcurrent detection, the control state of charge prohibition by VDD open detection is canceled and the charge control transistor CFET is turned on, thereby being able to prevent the charge control transistor CFET from being destroyed by the discharge overcurrent. Further, because the overdischarge mask circuit 13 is also provided, it is possible to prevent a situation in which the output of the overdischarge detection circuit 12 becomes indeterminate due to VDD open and response to the discharge overcurrent is hindered.

Further, according to the embodiment described above, the VDD open mask circuit 16 includes the second inversion circuit 161 including the input end connected to the output end of the discharge overcurrent detection circuit 15, and the second AND circuit 162 including the first input end connected to the output end of the second inversion circuit 161, the second input end connected to the output end of the VDD open detection circuit 11, and the output end connected to the control circuit. With this configuration, the VDD open mask circuit 16 can achieve the function by a slight circuit increase of the second inversion circuit 161 and the second AND circuit 162, and the application is easy.

Although at least one embodiment of the present invention has been described above in detail with reference to the drawings, the specific configuration is not limited to the above, and various design changes and the like can be made without departing from the gist of the present invention. For example, each of the charge/discharge control circuit 10, the charge/discharge control device 2, and the battery device 1 described above is an example of a semiconductor device formed on an N-type semiconductor substrate connected to the VDD terminal, but may be a semiconductor device formed on a P-type semiconductor substrate connected to the VSS terminal.

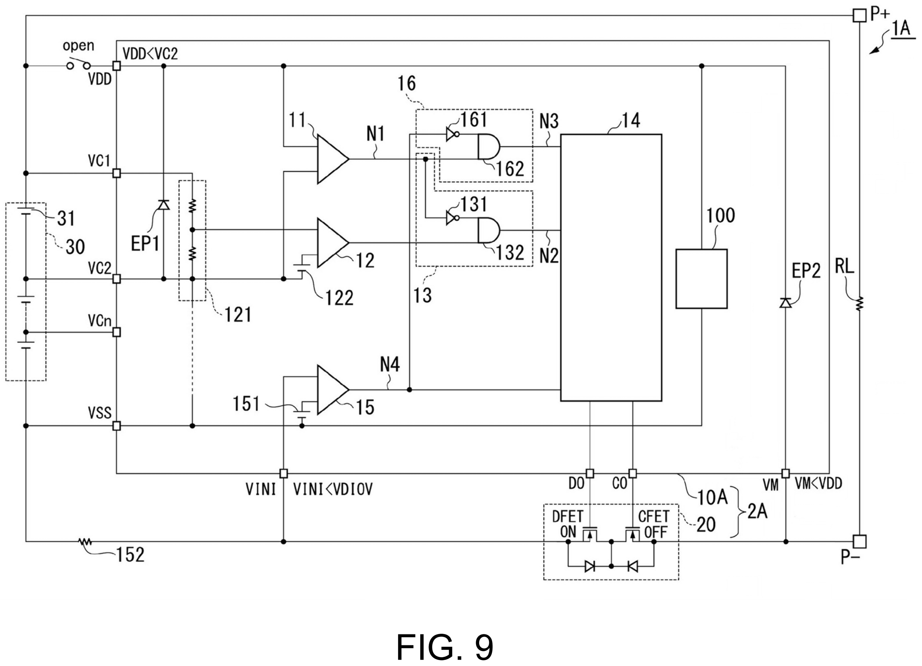

FIG. 9 is a schematic diagram for illustrating a battery device 1B which is an example of the battery device according to the at least one embodiment of the present invention and is a battery device according to a modification example of the first embodiment.

A charge/discharge control device 2B illustrated as an example in FIG. 9 has a so-called high-side configuration in which the external FET 20 is connected to the VDD terminal side. In such a high-side configuration, the power supply terminal connected to the semiconductor substrate is the VSS terminal. Accordingly, the operation described above is performed by replacing VDD by VSS. Accordingly, a charge/discharge control circuit 10B includes, as the power supply terminal open detection circuit, a VSS open detection circuit 21 instead of the VDD open detection circuit 11 illustrated in FIG. 1.

The charge/discharge control circuit, the charge/discharge control device, and the battery device according to the second embodiment may be modified similarly to the charge/discharge control circuit, the charge/discharge control device, and the battery device according to the first embodiment. With the charge/discharge control circuit, the charge/discharge control device, and the battery device according to the modification example configured in this manner, in a case in which the VSS terminal is open, the control in the case in which the VSS terminal is open is not hindered by the overdischarge detection signal, and the control (charge prohibition) of the external FET 20 corresponding to the state in which the VSS terminal is open can be reliably performed.

Further, in a case in which the discharge overcurrent is detected, the control state of charge prohibition due to detection of the open state of the VSS terminal is canceled, and the charge control transistor CFET is turned on, thereby being able to prevent the charge control transistor CFET from being destroyed by the discharge overcurrent. Further, because the overdischarge mask circuit 13 is also provided, it is possible to prevent a situation in which the output of the overdischarge detection circuit 12 becomes indeterminate due to the open state of the VSS terminal and response to the discharge overcurrent is hindered.

Nevertheless, the present invention is not limited to the embodiments as described above, and in the implementation stage, it is possible to implement the present invention in various forms other than the examples described above. Various omissions, additions, replacements, or changes can be made within a range which does not depart from the gist of the present invention. That is, the described components include those readily conceivable by those skilled in the art and those substantially equivalent, and these may be appropriately combined.

### Explanation of reference signs

1, 1A, 1B: battery device
2, 2A, 2B: charge/discharge control device
10, 10A, 10B: charge/discharge control circuit
11: VDD open detection circuit (power supply terminal open detection circuit)
12: overdischarge detection circuit
13: overdischarge mask circuit
131: first inversion circuit
132: first AND circuit
14: logic circuit
15: discharge overcurrent detection circuit
16: VDD open mask circuit (open mask circuit)
161: first inversion circuit
162: first AND circuit
20: external FET
21: VSS open detection circuit (power supply terminal open detection circuit)
30: secondary battery
31: highest cell
CFET: charge control transistor
DFET: discharge control transistor

## Claims

1. A charge/discharge control circuit (1, 1A, 1B) formed on a semiconductor substrate, the charge/discharge control circuit comprising:
a power supply terminal open detection circuit (11, 21) configured to detect whether a power supply terminal connected to the semiconductor substrate is in an open state in which the power supply terminal is not externally connected, and provide an open detection result signal including a signal level corresponding to a detection result;
an overdischarge detection circuit (12) configured to detect whether a secondary battery (30) is in an overdischarge state, and provide an overdischarge detection result signal including a signal level corresponding to a detection result;
a control circuit (14) configured to perform open/close control of a charge/discharge path of the secondary battery based on a detection result signal supplied from a detection circuit comprising the power supply terminal open detection circuit and the overdischarge detection circuit; and
an overdischarge mask circuit (13) configured to mask the overdischarge detection result signal supplied from the overdischarge detection circuit to the control circuit in a case in which the open detection result signal includes a signal level corresponding to the open state.

2. The charge/discharge control circuit (1, 1A, 1B) according to claim 1, wherein the overdischarge mask circuit (13) includes:
a first inversion circuit (131) including an input end connected to a connection point between an output end of the power supply terminal open detection circuit (11, 21) and the control circuit (14); and
a first AND circuit (132) including a first input end connected to an output end of the first inversion circuit, a second input end connected to an output end of the overdischarge detection circuit (12), and an output end connected to the control circuit.

3. The charge/discharge control circuit (1, 1A, 1B) according to claim 1, further comprising:
a discharge overcurrent detection circuit (15) configured to detect whether a state is a discharge overcurrent state, and provide a discharge overcurrent detection result signal including a signal level corresponding to a detection result; and
an open mask circuit (16) configured to mask the open detection result signal supplied from the power supply terminal open detection circuit (11, 21) to the control circuit (14) in a case in which the discharge overcurrent detection result signal supplied from the discharge overcurrent detection circuit (15) to the control circuit includes a signal level corresponding to the discharge overcurrent state.

4. The charge/discharge control circuit (1, 1A, 1B) according to claim 3, wherein the open mask circuit (16) includes:
a second inversion circuit (161) including an input end connected to an output end of the discharge overcurrent detection circuit (15); and
a second AND circuit (162) including a first input end connected to an output end of the second inversion circuit, a second input end connected to an output end of the power supply terminal open detection circuit (11, 21), and an output end connected to the control circuit (14).

5. A charge/discharge control device (2, 2A, 2B), comprising:
the charge/discharge control circuit (1, 1A, 1B) of any one of claims 1 to 4;
a charge control transistor (CFET) provided in the charge/discharge path, the charge control transistor including a gate connected to a charge control terminal of the charge/discharge control circuit; and
a discharge control transistor (DFET) provided in the charge/discharge path, the discharge control transistor including a gate connected to a discharge control terminal of the charge/discharge control circuit.

6. A battery device (1, 1A, 1B), comprising:
the charge/discharge control device (2, 2A, 2B) of claim 5; and
the secondary battery (30).
